# EUROPÄISCHE PATENTSCHRIFT

(11) **EP 0 557 778 B1**
(45) Veröffentlichungstag und Bekanntmachung des Hinweises auf die Patenterteilung: **20.05.1998**
(21) Anmeldenummer: 93101957.4
(22) Anmeldetag: 08.02.1993
(51) Int. Cl.: H04M 11/02

(54) **Telekommunikationssystem mit einem als Türfreisprechstelle ausgebildeten Endgerät**
Telecommunication system with a hands-free door telephone
Système de télécommunication avec un interphone à mains libre

(30) Priorität: 26.02.1992 DE 4205914
(43) Veröffentlichungstag der Anmeldung: 01.09.1993
(73) Patentinhaber: SIEMENS AKTIENGESELLSCHAFT, 80333 München (DE)
(72) Erfinder: Brune, Georg, Dr. Ing., W-5870 Hemer (DE)

(56) Entgegenhaltungen:
- EP-A- 0 295 470
- AT-A- 296 397
- CH-A- 656 277

## Beschreibung

Die Erfindung geht von einem Telekommunikationssystem aus, das die im Oberbegriff des Anspruches 1 enthaltenen Merkmale aufweist. Solche programmgesteuerten Kommunikationssysteme dienen zur Verbindung von Endgeräten untereinander und zur Verbindung dieser Endgeräte mit an andere Kommunikationssysteme angeschlossenen Endgeräten. Das zugrundeliegende Kommunikationssystem besteht im Prinzip aus einer Vielzahl von vermittlungstechnischen Funktionseinheiten und einem programmierbaren digitalen Rechnersystem, das diese Funktionseinheiten steuert und alle vermittlungstechnischen Abläufe überwacht. Dazu ist es erforderlich, daß das Rechnersystem mit Informationen über den Betriebszustand der Funktionseinheiten und über Zustandsänderungen, insbesondere über Eingabe an den daran angeschlossenen Endgeräten informiert wird. Es kann deshalb bei Bedarf umgehend entsprechende Steueranweisungen und Meldungen erstellen und ausgeben. Für die Steuerung der erforderlichen Abläufe greift die Systemsteuerung auf Informationen zu, die in den entsprechenden Speichereinheiten abgespeichert sind. Insbesondere im Zusammenhang mit sogenannten kleinen Telekommunikationssytemen ist es bekannt als Teilnehmer eine Türsprechstelle, die vorteilhaft als Türfreisprechstelle ausgebildet ist, anzuschließen. Dieser Anschluß erfolgt im allgemeinen über eine analoge Teilnehmerschnittstelle, wobei jedoch für eine derartige Teilnehmerstelle gewisse Funktionseinschränkungen gegenüber den anderen an das System angeschlossenen Fernsprechendgeräten bestehen. So wird eine solche Teilnehmerstelle beispielsweise nicht gerufen.

Durch die Patentschrift CH 656 277 A5 ist eine Türsprech- und Türöffnungsanlage bekannt, deren Türsprechstelle als Fernsprechteilnehmerstelle ausgebildet ist. Zu ihrem Betrieb werden für sich bekannte Leistungsmerkmale der Nebenstellenanlage eingesetzt. Insbesondere zur Betätigung des Türschließkontaktes wird eines der Leistungsmerkmale Rückfrage, Makeln oder die Möglichkeit der Konferenzschaltung ausgenutzt. Hierzu sind in jedem Falle, unabhängig von der Art der Aktivierung des Türschließkontaktes ausschließlich für den Betrieb dieser Türsprech- und Türöffneranlage insgesamt zwei Teilnehmeranschlußschaltungen erforderlich. Neben der Anschlußschaltung für die Türsprechstelle selbst ist auch für die ihr zugeordnete Türschließvorrichtung eine eigene Teilnehmeranschlußschaltung vorgesehen. Die Aktivierung der Türschließvorrichtung erfolgt durch einen im System selbst angeordneten Ansprechkreis, über den Kontakte die in der Anschlußleitung angeordnet sind, betätigt werden. Durch diese Kontakte wird eine Polaritätsumkehr auf den Adern der Anschlußleitung erreicht. Diese Änderung wird türsprechstellen-seitig ausgewertet und führt zur Betätigung des Türschließkontaktes, damit die Tür geöffnet werden kann. Die Betätigung des Türschließkontaktes bleibt so lange bestehen, bis die Belegung der für diese Funktion individuell zugeordneten Teilnehmeranschlußschaltung beendet ist.

Es ist die Aufgabe der Erfindung den für die Installierung einer Türsprechstelle notwendigen Aufwand zu verringern.

Die Lösung dieser Aufgabe erfolgt erfindungsgemäß mit den kennzeichnenden Merkmalen des Patentanspruches 1. Als wesentlich für die Erfindung ist anzusehen, daß sämtliche für den Betrieb der Türsprechstelle notwendigen Signalisierungen unter Verwendung einer einzigen normalen Teilnehmeranschlußleitung erfolgen. Die zugeordnete Anschlußleitung ist ohne system-seitige hardwaremäßige Modifizierung, d. h. auch ohne Einsatz eines zusätzlichen Relais bzw. einer zusätzlichen Schaltanordnung an die Anschlußschaltung gekoppelt. Durch die normal ausgebildete Teilnehmeranschlußschaltung wird die Speisung der Anschlußleitung sichergestellt, so daß mit der erfindungsgemäß vorgesehenen Betätigung eines an der Türsprechstelle vorgesehenen Schalters bzw. mit der Betätigung einer Taste die Teilnehmeranschlußleitung überbrückbar ist. Dadurch spricht die in der Teilnehmeranschlußschaltung vorgesehene Indikationsschaltung an. Wird die Überbrückung dieser Anschlußleitung beendet, so führt dies nicht zur Auslösung der betreffenden Leitung, sondern es erfolgt eine optische und/oder akustische Signalisierung bei einem vorher definierten Fernsprechendgerät. Wird der Ruf angenommen, so erfolgt die Herstellung der Sprechverbindung zur Türsprechstelle. Aufgrund einer an dem betreffenden Endgerät erfolgten und durch die Systemsteuerung ausgewerteten Informationseingabe wird zur Beeinflussung des Türschließungsmechanismus als entsprechendes Steuersignal das Rufspannungssignal an die betreffende Teilnehmeranschlußleitung angelegt. Diese Möglichkeit ist für jede Teilnehmeranschlußschaltung im System vorgesehen, so daß durch diese erfindungsgemäße Auswahl des Steuersignals system-seitig keine Hardwareänderungen vorzunehmen sind. Zur Freigabe des Türschließmechanismus wird erfindungsgemäß das Rufspannungssignal in einer dem als Sonderendgerät ausgeführten Türsprechstelle unmittelbar zugeordneten oder in ihm integrierten Auswerteeinheit entsprechend ausgewertet. Dies kann beispielsweise in der Weise geschehen, daß durch das Rufspannungssignal ein mit der Anschlußleitung gekoppeltes Schalterelement wirksam geschaltet wird, das seinerseits das zur Freigabe des Türschließungsmechanismus dienende Element, das beispielsweise als Türöffnermagnet realisiert ist, beeinflußt. Erfindungsgemäß ist die Auslösung der Verbindung zur Türsprechstelle ausschließlich über das daran teilnehmende Fernsprechendgerät einleitbar.

Weitere vorteilhafte Ausgestaltungen aer Erfindung sind den restlichen Unteransprüchen zu entnehmen.

Im folgenden wird das erfindungsgemäße Telekommunikationssystem insbesondere im Hinblick auf die daran angeschlossene Türfreisprechstelle anhand eines vereinfachten Blockschaltbildes näher erläutert.

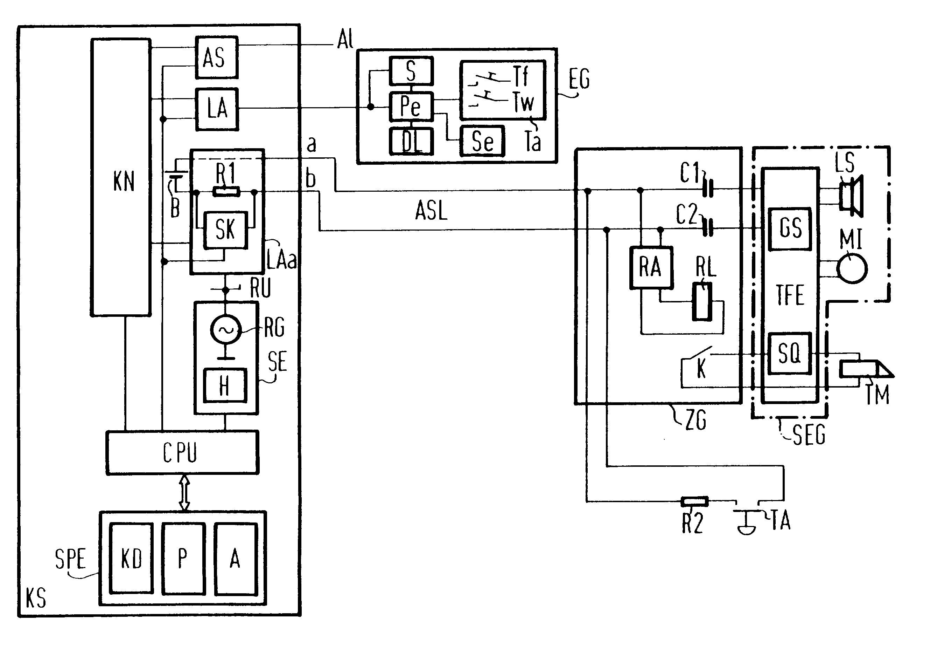

Das Telekommunikationssystem KS kann beispielsweise ein sogenanntes kleines Nebenstellenkommunikationssystem darstellen, an das eine Mehrzahl von Fernsprechendgeräten anschließbar sind. Stellvertretend für diese Endgeräte ist in der Figur lediglich das Endgerät EG und das Sonderendgerät SEG als unterschiedliche Ausführungsform angedeutet. Es sind grundsätzlich auch andere Geräte, wie Telefaxgeräte und über Modems auch Datensicht- und Datenverarbeitungsgeräte anschließbar. Das Kommunikationssystem kann mit dem öffentlichen Telekommunikationsnetz über mindestens eine Amtsleitung AL oder auch mit anderen Telekommunikationssystemen verbunden sein. Das Telekommunikationssystem KS besteht im Prinzip aus einzelnen, untereinander verbundenen modularen Einheiten. Als Schnittstelleneinrichtungen zu den Endgeräten sind in Abhängigkeit von der Art der angeschlossenen Kommunikationsendgeräte, die sowohl digitale als auch analoge Kommunikationsendgeräte darstellen können, unterschiedliche Anschaltungsbaugruppen, sind - symbolisiert durch die Einheiten LA, bzw. AS - vorgesehen. Durch sie werden u.a. unterschiedliche Signalisierungsinformationen von den Endgeräten oder den Netzen auf ein innerhalb des Kommunikationssytems einheitlich verwendetes Format umgewandelt. Eine weitere wesentliche Einheit bildet die Koppeleinrichtung KN, die die Sprechverbindungen zwischen den Endgeräten untereinander oder zwischen den Endgeräten und angeschlossenen Telekommunikationsnetzen durchschaltet. Weiterhin ist eine zentrale Signaleinrichtung SE vorhanden, die neben dem für die Erzeugung der Hörtöne vorgesehenen Modul H einen für die Erzeugung der Rufspannung RU zuständigen Ruftongenerator RG enthält. Die von ihm gelieferten Rufsignale werden über eine gemeinsame Rufleitung den Anschaltebaugruppen LA zugeführt und an die jeweilige Anschlußleitung angelegt. Dies erfolgt durch Schaltmittel, die jeweils durch eine vorgegebene Rufprozedur gesteuert werden.

Sämtliche modularen Einheiten sind mit einer zentralen Steuerung verbunden. Diese zentrale Steuerung besteht aus der Systemsteuerung CPU und der zentralen Speichereinrichtung SPE. Diese gliedert sich grundsätzlich in einen Kundendatenspeicher KD, einen Programmspeicher P und einen Arbeitsspeicher A. Im Programmspeicher P sind u.a. das Anlagenbetriebsprogramm abgespeichert. In dem Speicherteil KD sind die Kundendaten, wie z.B. die den einzelnen Kommunikationsendgeräten EG zugeteilten Berechtigungen abgelegt. Außerdem sind darin weitere Besonderheiten der angeschlossenen Endgeräte abgespeichert. Der Arbeitsspeicher A dient u.a. der Aufnahme von temporären Daten zur Programmablauf-Steuerung. Durch die Systemsteuerung werden die Funktionen der einzelnen Einheiten überwacht, diese Einheiten werden zur Ausführung ihrer spezifischen Funktionen angeregt und es werden von diesen Einheiten Daten entgegengenommen.

Die im Speicherteil KD abgelegten Kundendaten können beispielsweise durch ein als betriebstechnische Einrichtung vorbestimmtes Teilnehmerendgerät, das beispielsweise das Endgerät EG sein kann, konfiguriert werden. Ein angeschlossenes Fernsprechendgerät EG, das zur endgerätespezifischen Signalisierungsverarbeitung über die Schnittstelle LA mit dem System verbunden ist, weist ein Display DL und eine Tastatur Ta auf. Die Taste Tw symbolisiert die übliche Wähltastatur. Durch die Taste Tf soll das Vorhandensein von weiteren Funktionstasten angedeutet werden. Der Tastenblock Ta ist mit einer z.B. durch einen Prozessor realisierten Steuereinheit Pe gekoppelt. Mit dieser Steuereinheit ist ferner eine Schnittstelleneinheit S verbunden, durch die diejenigen Signalisierungsinformationen an das Vermittlungssytem KS weitergegeben werden, die jeweils einer bestimmten Taste bei ihrer Betätigung zugordnet sind.
Weiterhin ist diese Schnittstelleneinrichtung S befähigt, diejenigen Informationen zu registrieren, die dem Fernsprechendgerät EG durch das Vermittlungssytem zur weiteren Verarbeitung übermittelt werden. Zumindest ein Teil der abgehenden und der ankommenden Signalisierungsinformationen werden auf dem Display DL angezeigt. Die Einheit Se ist als Speicher ausgebildet und dient beispielsweise der Aufnahme eines Betriebsprogrammes für die Steuereinheit Pe und für zwischenzuspeichernde Daten.

Als Teilnehmer kann über eine Anschlußleitung ASL ein Sonderendgerät SEG in gleicher Weise wie ein normales analoges Endgerät angeschlossen werden, wobei mit diesem Sonderendgerät die Funktionen einer sogenannten Tür- bzw. Torsprechstelle realisiert sind. Uber einen Türfreisprechverstärker TFE, der auch die durch die Einheit GS angedeutete Gabelschaltung beinhaltet ist ein Mikrophon MI bzw. ein Lautsprecher LS angeschlossen.

Die zweiadrige Anschlußleitung ASL wird in gleicher Weise wie die zu den übrigen Endgeräten führenden Anschlußleitungen systemseitig durch eine Gleichspannungs-Versorgungseinheit, die durch die Batterie B symbolisiert ist, gespeist. Innerhalb der Leitungsanschlußeinheit LAa wird durch eine über den Widerstand R1 angekoppelte Indikationsschaltung SK der jeweilige Leitungszustand signalisiert. Die Ausgangsinformation der Indikationsschaltung SK wird innerhalb eines bestimmten Abfragezykluses durch die Systemsteuerung CPU abgefragt. Damit wird in gleicher Weise wie für die übrigen Anschlußleitungen eine Zustandsänderung festgestellt, wodurch dann gleichzeitig die Identifizierung des betreffenden Anschlußes eingeleitet wird.
Damit ist dann das betreffende Endgerät bekannt, sodaß durch die Systemsteuerung auf die bezüglich dieses jeweiligen Endgerätes u.a. im Kundendatenspeicher KD der Speichereinrichtung SPE enthaltenen Informationen zurückgegriffen werden kann.

Die an der Türfreisprechstelle angeordnete Taste TA ist von einer Person, die zunächst über die Türsprechstelle kommunizieren will, zu betätigen. Mit dieser Betätigung fließt in der Anschlußleitung AsL ein Schleifenstrom, desses Wert im wesentlichen durch den Widerstand R2 bestimmt wird. Dieser Widerstand entspricht dem beim Anschluß eines normalen Fernsprechendgerätes auftretenden Leitungsabschlußwiderstand. Mit der Betätigung der Taste TA wird somit das Abheben des Handapparates an einem solchen Fernsprechendgerät simuliert. Es fließt somit über die Ader a/b ein Schleifenstrom, der über den Spannungsabfall am Widerstand R1 in der Anschalteeinheit LAa die Indikationsschaltung SK ansprechen läßt. Ihr geändertes Ausgangssignal wird durch die Systemsteuerung CPU erkannt und das anfordernde Endgerät als das Sonderendgerät SEG identifiziert. Durch die Programmsteuerung des Telekommunikationssystems KS muß nun die kurzzeitige Aktivierung des Schleifenstromes zu anderen Abläufen führen,als dies bei einem normalen Fernsprechendgerät der Fall wäre. Beim letzteren würde das Loslassen der Taste TA sofort die Auslösung der Leitung bewirken. Im Zusammenhang mit der Türfreisprechstelle wird jedoch bei einer auch kurzzeitigen Betätigung der Taste TA nach der Identifizierung des Teilnehmeranschlusses durch die Systemsteuerung eine optische und/oder akustische Rufsignalisierung zu einem im Kundendatenspeicher KD definierten Endgerät veranlaßt. Es kann auch vorgesehen sein, daß diese Anrufsignalisierung zu einer anderen Teilnehmerendeinrichtung weitergeleitet wird, wenn sich der ursprünglich gerufene Teilnehmer z.B. innerhalb einer gewissen Zeit oder nach einer bestimmten Anzahl von Rufzyklen nicht meldet. Eine derartige Rufweiterleitung kann nach bekannten unterschiedlichen Gesichtspunkten erfolgten. So können beispielsweise bestimmte zu einer Gruppe zusammengefaßte Fernsprechendgeräte in einer vorgegebenen Reihenfolge nacheinander so lange die Rufsignalisierung erhalten, bis sich ein Teilnehmer meldet.

Beim Melden einer gerufenen Teilnehmerstelle wird eine Sprechverbindung zur Türsprechstelle hergestellt. Für das Gespräch mit dieser besonderen Teilnehmerstelle ist ein dauernder Gleichstrom-Leitungsschleifenschluß nicht erforderlich. Während eines solchen Gespräches ist nämlich keine Speisung notwendig, sodaß an der Türsprechstelle die Anschlußleitung durch die Kondensatoren C1 und C2 gleichstrommäßig abgeriegelt sein kann. Die Türsprechstellenschaltung weist einen sehr hochohmigen Eingang auf und es findet nur die Übertragung der Sprechwechselströme statt.

Es ist auch denkbar, daß in den Fällen, in denen die Rufsignalisierung durch eine der vorgesehen Teilnehmer nicht angenommen wird die Systemsteuerung CPU eine zentral angeordnete Weck- bzw. Klingeleinrichtung aktiviert. Durch Betätigung einer vorbestimmten Funktionstaste an einem Fernsprechendgerät wird dann die Sprechverbindung zur Türsprechstelle durch die Systemsteuerung aufgebaut. An Stelle der Betätigung dieser Funktionstaste könnte auch eine charakteristische Ziffernkombination und/oder Steuerzeichencode durch einen Teilnehmer eingegeben werden.

Eine Betätigung der Taste TA während der bestehenden Gesprächverbindung zwischen einem Endgerät EG und der Türsprechstelle bleibt ohne besondere nachteilige Auswirkung. Es ergeben sich in einem solchen Fall nur Dämpfungsverhältnisse die der Parallelschaltung von zwei normalen Fernsprechendgeräten entsprechen würden. Diese Dämpfungsänderung ist im Hinblick auf die Sprachverständlichkeit kaum wahrzunehmen. Um eine exakte Schließungszeit der Taste TA vorzugeben, könnte auch zunächst z. B. eine monostabile Kippschaltung aktiviert werden, die unabhängig von Manipulationen an oder mit der Taste TA den Zeitraum des Leitungschleifenflusses exakt definiert.

Sämtliche im Zusammenhang mit der Funktion der Türsprechstelle stehenden Signalisierungen werden über die eine Anschlußleitung ASL, über die die Türsprechstelle mit der hierfür vorgesehenen einzigen Teilnehmeranschlußleitung verbunden ist, abgewickelt. Zur Betätigung eines Türöffnermagneten TM wird am Endgerät EG eine entsprechende Information eingegeben. Diese Eingabe kann beispielsweise durch die Betätigung einer bestimmten Funktionstaste Tf vorgenommen werden. Mittels des Anlagenbetriebsprogrammes wird daraufhin nach der Auswertung der übermittelten Information durch die Systemsteuerung CPU die Anschaltung der vom Generator RG gelieferten Rufwechselspannung RU an die Anschlußleitung ASL veranlaßt. Dies kann beispielsweise durch die Aktivierung eines innerhalb der Schnittstellenschaltung LAa vorhandenen und nicht weiter dargestellten Schalters geschehen. Diese übertragene Rufwechselspannung wird in der Zusatzeinrichtung ZG erkannt und führt dann letztendlich zur Aktivierung des Türöffnermagneten TM. Die Rufwechselspannung wird nämlich in der Einheit RA ausgewertet und in eine zur Ansteuerung des Relais RL dienende Gleichspannung umgewandelt. Mit dem Ansprechen des Relais RL durch die angelegte Rufwechselspannung wird der relaiseigene Kontakt k aus der eingezeichneten Ruhelage in die Arbeitslage geschaltet. Es könnte noch ein weiterer Kontakt vorgesehen werden, mit dem der Sprechweg geöffnet wird. Damit könnte verhindert werden, daß aufgrund der angelegten Rufwechselspannungssignale störende Geräusche durch den Lautsprecher LS abgegeben werden. Mit dem Kontakt k wird ein Ansprechkreis für den Türöffnermagneten TM geschlossen. Die hierzu notwendige Versorgungsspannung wird von einem dem Türfreisprechverstärker TFE zugeordneten Steckernetzteil geliefert. Das Netzteil kann in dem Sonderendgerät SEG integriert sein. Das Zurverfügungstellen der notwendigen Versorgungsspannung wird durch die Einheit SQ symbolisiert. Sinnvollerweise erfolgt die Installation der Zusatzeinrichtung ZG in unmittelbarer Nähe des Sonderendgerätes SEG bzw. des Türfreisprechverstärkers TFE. Die für die Zusatzeinrichtung ZG notwendigen Elemente könnten in einem Gehäuse, das ähnlich der üblichen Anschlußdosen ausgebildet ist, untergebracht werden oder sie könnten auch im Sonderendgerät SEG selbst intergriert sein.

Die im Zusammenhang mit der Funktion einer installierten Türfreisprechstelle vorgesehenen Informationsübertragungen bzw. notwendigen Signalisierungen werden also außschließlich über die zweiadrige Anschlußleitung ASL übermittelt.

## Patentansprüche

1. Telekommunikationssystem (KS) mit einer speicherprogrammierten Systemsteuerung (CPU) und mit unter anderem endgeräteindividuell zuweisbaren Speicherbereichen von Speichereinheiten in denen Informationen über die jeweilige Anschlußart der daran angeschlossenen und wahlweise miteinander bzw. mit einer Amtsleitung zu verbindenden Fernsprechendgeräte (EG) und der aktuelle Zustand einspeicherbar ist, wobei mindestens ein Endgerät als ein zumindest einen entsprechend ausgelegten Mikrophon- und Lautsprecherkreis enthaltendes Sonderendgerät (SEG) ausgebildet ist, zu dem bedarfsweise vermittels eines der anderen Fernsprechendgeräte eine Sprechverbindung schaltbar ist und wobei die zum Sonderendgerät (SEG) führende Anschlußleitung (ASL) systemseitig entsprechend der Anschlußart für andere Endgeräte mit einer Teilnehmeranschlußschaltung gekoppelt ist und die zur Beeinflussung des Türschließungsmechanismus erforderliche Signalisierung über die Anschlußleitung (ASL) übermittelt wird,
**dadurch gekennzeichnet,**
daß in unmittelbar räumlicher Zuordnung zu dem Sonderendgerät (SEG) ein manuell betätigbares Kontaktelement (TA) vorgesehen ist, durch dessen Betätigung der Leistungsschleifenschluß erfolgt und daß nach der Identifizierung dieses Sonderendgerätes (SEG) durch die Systemsteuerung unabhängig von der nachfolgend eingenommenen Schaltstellung des Kontaktelementes (TA) eine optische und/oder akustische Signalisierung zu einem durch eine entsprechende Abspeicherung vorab, ggf. als eines von mehreren festgelegten Teilnehmerendgerät (EG) vorgenommen und mit der Rufannahme die Verbindung zu dem Sonderendgerät durchgeschaltet wird, daß das Steuersignal zur Beeinflussung des Türschließungsmechanismus das aufgrund einer an dem Endgerät (EG) erfolgten und durch die Systemsteuerung ausgewerteten Informationseingabe angelegte Rufspannungssignal darstellt.

2. Telekommunikationssystem nach Anspruch 1,
**dadurch gekennzeichnet,**
daß das Steuersignal in Form des Rufspannungssignals in einer dem Sonderendgerät (SEG) unmittelbar zugeordneten oder in ihm integrierten Auswerteeinheit (ZG) in der Weise ausgewertet wird, daß der Ansprechkreis für ein zur Freigabe des Türschließungsmechanismus dienendes Element (TA) geschlossen wird.

3. Telekommunikationssystem nach Anspruch 2,
**dadurch gekennzeichnet,**
daß das Steuersignal mittelbar oder unmittelbar ein mit dieser Anschlußleitung gekoppeltes Schalterelement (RL) wirksam schaltet, das seinerseits das zur Freigabe des Türschließungsmechanismus dienende Element (TM) beeinflußt.

4. Telekommunikationssystem nach einem der Ansprüche 1 bis 3,
**dadurch gekennzeichnet,**
daß die Auslösung der Verbindung zum Sonderendgerät (SEG) ausschließlich über das daran teilnehmende Fernsprechendgerät (EG) einleitbar ist.

5. Telekommunikationssystem nach einem der Ansprüche 1 bis 4,
**dadurch gekennzeichnet,**
daß bei einer nicht zustandegekommenen Gesprächsverbindung mit dem ursprünglich angeforderten Fernsprechendgerät (EG) im Rahmen einer Rufweiterleitung mindestens ein weiteres vorbestimmtes Fernsprechendgerät gerufen wird.

6. Telekommunikationssystem nach Anspruch 5,
**dadurch gekennzeichnet,**
daß bei einem erfolglosem Verbindungsversuch bis zum Zustandekommen einer Gesprächsverbindung nacheinander in einer vorgegebenen Reihenfolge innerhalb einer vorbestimmten Gruppe von Fernsprechendgeräten die optische oder akustische Anforderungssignalisierung erfolgt.

7. Telekommunikationssystem nach Anspruch 2 oder 3,
**dadurch gekennzeichnet,**
daß das zur Freigabe des Türschließungsmechanismus dienende Element einen sogenannten Türöffnermagnet (TM) darstellt.

8. Telekommunikationssystem nach einem der Ansprüche 1 bis 6,
**dadurch gekennzeichnet,**
daß der Mikrophon (MI)- und der Lautsprecherkreis (LS) des Sonderendgerätes (SEG) von der Anschlußleitung (ASL) galvanisch getrennt ist (C1, C2).

## Claims

1. Telecommunications system (KS) having a programmable system controller (CPU) and having memory areas (which can be assigned inter alia on a terminal-specific basis) of memory units in which information can be stored relating to the current status and to the respective type of connection of the telephone terminals (EG) which are connected to it and which can optionally be connected to one another and/or to an exchange line, at least one terminal being designed as a special terminal (SEG) which contains at least one correspondingly designed microphone and loud speaker circuit and to which, if required, a voice link can be connected by means of one of the other telephone terminals, and the connecting line (ASL) which leads to the special terminal (SEG) being coupled on the system side to a subscriber connecting circuit, corresponding to the type of connection for other terminals, and the signalling required to influence the door closing mechanism being transmitted via the connecting line (ASL), characterized in that a manually operable contact element (TA) is provided in the immediate physical vicinity of the special terminal (SEG), operation of which contact element (TA) closes the power loop, and in that, once the system controller has identified this special terminal (SEG), and independently of the switch position of the contact element (TA) assumed subsequently, visual and/or audible signalling is carried out to a subscriber terminal (EG) which is defined in advance by appropriate storage and may be one or more terminals, and, when the call is accepted, the connection is switched through to the special terminal, in that the control signal for influencing the door closing mechanism represents the ringing voltage signal which is applied on the basis of an information input that takes place to the terminal (EG) and is evaluated by the system controller.

2. Telecommunications system according to Claim 1, characterized in that the control signal is evaluated in the form of a ringing voltage signal in an evaluation unit (ZG), which is directly associated with the special terminal (SEG) or is integrated in it, in such a manner that the operating circuit for an element (TA) which is used to release the door closing mechanism is closed.

3. Telecommunications system according to Claim 2, characterized in that the control signal indirectly or directly switches a switch element (RL) to be active, which switch element (RL) is coupled to this connecting line and, for its part, influences the element (TM) which is used to release the door closing mechanism.

4. Telecommunications system according to one of Claims 1 to 3, characterized in that the initiation of the link to the special terminal (SEG) can be initiated only via the telephone terminal (EG) involved with it.

5. Telecommunications system according to one of Claims 1 to 4, characterized in that, if a voice link with the originally requested telephone terminal (EG) does not come about, at least one further predetermined telephone terminal is called in the course of a call transfer.

6. Telecommunications system according to Claim 5, characterized in that, if a call attempt is unsuccessful, the visual or audible request signalling is carried out successively in a predetermined sequence within a predetermined group of telephone terminals until a call connection is made.

7. Telecommunications system according to Claim 2 or 3, characterized in that the element which is used to release the door closing mechanism represents a so-called door opener magnet (TM).

8. Telecommunications system according to one of Claims 1 to 6, characterized in that the microphone (MI) and the loud speaker (LS) circuit of the special terminal (SEG) is DC-isolated (C1, C2) from the connecting line (ASL).

## Revendications

1. Système de télécommunication (KS) comportant une commande de système (CPU) programmée en mémoire et comportant entre autres des zones de mémoire, pouvant être attribuées individuellement à des terminaux d'unités de mémoire et dans lesquelles des informations sur le type de raccordement respectif des terminaux téléphoniques (EG), raccordés et à relier à volonté les uns aux autres ou à une ligne principale, et l'état actuel peuvent être mémorisées, au moins un terminal étant conçu comme un terminal spécial (SEG) qui contient au moins un circuit à microphone et à haut-parleur conçu de manière appropriée et vers lequel une liaison vocale peut être commutée sur demande au moyen d'un des autres terminaux téléphoniques, la ligne de raccordement (ASL) qui conduit au terminal spécial (SEG) étant connectée du côté du système en fonction du type de raccordement pour d'autres terminaux à un circuit de raccordement d'abonné et la signalisation nécessaire à l'action sur le mécanisme de fermeture de porte étant transmise par l'intermédiaire de la ligne de raccordement (ASL), caractérisé par le fait que
à proximité immédiate du terminal spécial (SEG), il est prévu d'associer à celui-ci un élément formant contact (TA) qui peut être actionné manuellement et dont l'actionnement provoque la fermeture de boucle,
au moyen de la commande de système, après l'identification de ce terminal spécial (SEG) et indépendamment de la position prise ensuite par l'élément formant contact (TA), une signalisation optique et/ou acoustique est mise en oeuvre vers un terminal d'abonné (EG), éventuellement un parmi plusieurs, spécifié au préalable par une mémorisation correspondante et la liaison vers le terminal spécial est commutée lors de l'acceptation d'appel, et que
le signal de commande destiné à agir sur le mécanisme de fermeture de porte correspond au signal de tension d'appel appliqué en raison d'une entrée d'information effectuée sur le terminal (EG) et exploitée par la commande de système.

2. Système de télécommunication selon la revendication 1,
caractérisé par le fait que
le signal de commande sous forme de signal de tension d'appel est exploité dans une unité d'évaluation (ZG), associée directement au terminal spécial (SEG) ou intégrée dans celui-ci, de telle sorte que le circuit de réaction pour un élément (TM) servant à la libération du mécanisme de fermeture de porte est fermé.

3. Système de télécommunication selon la revendication 2,
caractérisé par le fait que
le signal de commande active directement ou indirectement un élément interrupteur (RL) qui est connecté à cette ligne de raccordement et qui agit pour sa part sur l'élément (TM) servant à la libération du mécanisme de fermeture de porte.

4. Système de télécommunication selon l'une des revendications 1 à 3,
caractérisé par le fait que
la libération de la liaison vers le terminal spécial (SEG) ne peut être déclenchée que par le terminal téléphonique (EG) participant à cette liaison.

5. Système de télécommunication selon l'une des revendications 1 à 4,
caractérisé par le fait que
lorsque la liaison vocale avec le terminal téléphonique (EG) demandé initialement n'est pas mise en oeuvre efficacement, au moins un autre terminal téléphonique prédéterminé est appelé dans le cadre d'une déviation automatique d'appel.

6. Système de télécommunication selon la revendication 5,
caractérisé par le fait que
lors de l'échec d'une tentative de liaison, on produit jusqu'à la mise en oeuvre efficace d'une liaison vocale la signalisation optique ou acoustique de demande à l'intérieur d'un groupe prédéterminé de terminaux téléphoniques appelés les uns après les autres dans un ordre prédéterminé.

7. Système de télécommunication selon la revendication 2 ou 3,
caractérisé par le fait que
l'élément servant à la libération du mécanisme de fermeture de porte est un dispositif magnétique d'ouverture de porte (TM).

8. Système de télécommunication selon l'une des revendications 1 à 6,
caractérisé par le fait que
le circuit à microphone (MI) et à haut-parleur (LS) du terminal spécial (SEG) est séparé au niveau ohmique (C1, C2) de la ligne de raccordement (ASL).
